# EUROPEAN PATENT SPECIFICATION

(11) **EP 2 813 399 B1**
(45) Date of publication and mention of the grant of the patent: **22.08.2018**
(21) Application number: 13382223.9
(22) Date of filing: 13.06.2013
(51) Int. Cl.: B60R 16/023, B60K 35/00

(54) **Method for displaying information in a vehicle**
Verfahren zur Anzeige von Informationen in einem Fahrzeug
Procédé pour afficher des informations dans un véhicule

(43) Date of publication of application: 17.12.2014
(73) Proprietor: Seat, S.A., 08760 Martorell (ES)
(72) Inventor: Baños, Victor, 08860 CASTELLDEFELS (ES); Bayona, Teresa, 08700 IGUALADA (ES)
(74) Representative: Isern Patentes y Marcas S.L.

(56) References cited:
- EP-A1- 2 196 370
- DE-A1-102008 047 923
- US-A1- 2005 278 079

## Description

### OBJECT OF THE INVENTION

The purpose of the patent application herein relates to a procedure for displaying information in a car that incorporates significant innovations and advantages.

The invention herein relates more specifically to a method for displaying the remaining range in a hybrid car and, more particularly, the range available by using an alternative energy source compared to using a fossil fuel, showing the degree of range the charge level represents in the aforementioned source of alternative energy in a differentiated image.

The object of the invention leads to an increase in the accuracy with which the user knows the distance that can be travelled using this alternative energy source.

The corresponding device is also an object of the invention herein.

### BACKGROUND OF THE INVENTION

There are typically two different energy sources in hybrid vehicles that can be used independently, and preferably displaying the available range for each one of the energy sources to the person using the car. Considering that the sum of the ranges of each energy source is the total range for the hybrid vehicle, the combination of these two available ranges tends to be represented on a flowchart, usually with different colours. The problem arises when the range in combustion engine mode is usually considerably greater than that in alternative energy source mode, thus this second part is almost unrecognisable in the flowchart, due to the lower order of magnitude.

Displaying the remaining range of a vehicle in the shape of a bar with a scale is known from the prior art. In addition, according to document EP1018449 of the prior art, short-term fuel consumption and long-term fuel consumption is also known. Long-term fuel consumption is calculated in a common quantitative unit, being indicated on a screen by a bar chart and a level indicator which has a common graduated scale, thereby visually assisting in making a decision.

On the other hand, document DE102010020673 of the prior art describes a device with display areas which respectively represent two modes in a hybrid vehicle. An indicator pointer is controlled by a driving parameter, and displays the current value of the vehicle parameter in the hybrid modes in the display regions. A display device comprises an additional display mode which includes a flow diagram of the energy of the hybrid vehicle. The display regions of the device are run as closed circle segments.

On the other hand, document FR2961909 of the prior art describes a display having an assembly of segments arranged in correspondence with the nonlinear graduation (1, 1/2, R). Each segment, in order from higher to lower, corresponds to the decrease in the amount of available energy, deactivating as the available energy decreases. A surface of the active segments relates to the realistic indication of an amount of remaining energy, wherein the surface of the segments is a linear representation of the remaining energy.

On the other hand, document DE102010010620 of the prior art describes a device, such as information content on a combined screen, which indicates the point in time when a motor vehicle does not return to a default starting point due to the insufficient amount of energy storage. It also indicates the movement of the motor vehicle from a current position to a navigation destination, in the form of a map. The amount of energy stored in the form of a specified time interval is also shown.

On the other hand, generic document DE102008047923 of the prior art describes a method that involves presetting a target electrical range, which is exclusively stored by a vehicle with an electric motor. A driven distance is preset and stored in the vehicle from a current location until next charging of a battery. A driving operation of the vehicle is optimized such that a loading condition of the battery lies on a minimum value under the consideration of boundary conditions that are preset by the target electrical range and the driven distance up to the next loading when the vehicle stores the driven distance.

Thus, there is still a need to provide a clear visual indication in order to determine the degree of range remaining in the vehicle, in particular the range related to the alternative energy source.

### DESCRIPTION OF THE INVENTION

The present invention relates to a method for displaying information in a car in respect of the remaining range with the alternative energy source, differentiated from that of a fossil fuel, such that the driver may know the exact distance that can be travelled using this alternative energy source. The corresponding device is also an object of the invention herein.

To resolve the aforementioned problem, a second flowchart is displayed graphically on the vehicle screen, further detailing the range only in consumption mode of the alternative energy source.

The solution of the object of the invention herein is reached by means of a method having the characteristics of claim 1 and by means of a device with the characteristics of claim 11.

Using the invention herein obtains the advantages and resolves the aforementioned drawbacks, further providing other additional advantages that will be apparent from the description detailed hereinafter.

Thus, the method of the invention herein for displaying information in a hybrid car, said hybrid car comprising at least one alternative energy source compared to a source of energy from a fossil fuel, includes the following stages:
- by means of a control device, graphical data are generated on a graphical display device,
- by means of the aforementioned graphical display device, at least one image indicative of an available range is displayed, wherein a main image comprises a first sector indicative of the range available by using a fossil fuel as the source energy and a second sector indicative of the range available by using the alternative energy source, comprising an additional image with a sector as an expansion of the second sector indicative of the range available by the alternative energy source.

In this way, the user can immediately observe both the information on the energy from a fossil fuel that is remaining and the further details on the alternative energy remaining, and with little, if any, need to take their eyes off the road, thereby minimising safety risks.

Advantageously, at least one image is indicative of the total range available by adding the range available in each of the energy sources of the hybrid car. In this way, the user can immediately observe the information on the total energy remaining, as an addition of all available energy sources in the car, and with little, if any, need to take their eyes off the road, thereby minimising safety risks.

In a preferred embodiment of the invention, the alternative energy source is an electrical energy source with the advantages that this type of energy represents for the environment due to absence of waste emission, both during production and disposal.

More particularly, the first sector of the main image is differentiated with respect to the second sector. Such graphical differentiation enables the user to visually define the part of the image related to the fossil fuel energy source from the alternative energy source in the main image.

Advantageously, the sector of the additional image comprises the same differentiation as the second sector of the main image. In this way, the user can also visually define the part of the image related to the fossil fuel energy source from the alternative energy source in the additional image.

According to another aspect of the invention, at least one image comprises an intermediate drawing linking the additional image with the second sector of the main image. In this way, the user further and unequivocally associates the additional image with the aforementioned second sector of the main image, making a clearer reference to the image that the alternative energy source represents.

More specifically, at least one image comprises a third sector indicative of the range consumed of the alternative energy source. In this way, the user can clearly interpret the information related to consumption thus far of such alternative energy.

Advantageously, at least one image on each sector comprises an icon indicative of the energy type whose range it represents, in order to make the image(s) displayed clearer for the user of interpret.

In a preferred embodiment of the invention, at least one image is bar-shaped, in order to simply and graphically display the energy consumed and the remaining range.

According to another aspect of the invention, the main image and the additional image are shown simultaneously. Hence, when the user indicates that the information relating to the various sources of energy present in the hybrid vehicle should appear on the graphical display device, all images are presented immediately, and the user does not have to take additional steps to show the detailed information.

According to yet another aspect of the invention, the available range is expressed in Km, KWh, percentage and/or time, thereby making it possible to display the remaining energy level of the various energy sources in the hybrid vehicle to the user, on the one hand, in a comprehensible manner and, on the other hand, that can be applied to driving.

The advantages of the device of the invention herein are the same as those previously mentioned for the method implemented therein. Thus, the device of the invention herein for displaying information in a hybrid vehicle, said hybrid vehicle comprising at least one alternative energy source compared to a source of energy from a fossil fuel, is configured such that it includes the following stages:
- by means of a control device graphical data are generated on a graphical display device,
- by means of the aforementioned graphical display device at least one image indicative of an available range is displayed, wherein a main image comprises a first sector indicative of the range available by using a fossil fuel as the source energy and a second sector indicative of the range available by using the alternative energy source, comprising an additional image with a sector as an expansion of the second sector indicative of the range available by the alternative energy source.

In this way, the user can immediately observe both the information on the energy from a fossil fuel which is remaining and the further details on the alternative energy remaining, and with little, if any, need to take their eyes off the road, thereby minimising safety risks.

Advantageously, at least one image is indicative of the total range available by adding the range available in each of the energy sources of the hybrid car. In this way, the user can immediately observe the information on the total energy remaining, as an addition of all available energy sources in the car, and with little, if any, need to take their eyes off the road, thereby minimising safety risks.

In a preferred embodiment of the device of the invention, the alternative energy source is an electrical energy source with the advantages that this type of energy represents for the environment due to the absence of waste emission, both during production and disposal. More particularly, the first sector of the main image is differentiated with respect to the second sector. Such graphical differentiation enables the user to visually define the part of the image related to the fossil fuel energy source from the alternative energy source in the main image.

Advantageously, the sector of the additional image comprises the same differentiation as the second sector of the main image. In this way, the user can also visually define the part of the image related to the fossil fuel energy source from the alternative energy source in the additional image.

According to another aspect of the device of the invention, at least one image comprises an intermediate drawing linking the additional image with the second sector of the main image. In this way, the user further and unequivocally associates the additional image with the aforementioned second sector of the main image, making a clearer reference to the image that the alternative energy source represents.

More specifically, at least one image comprises a third sector indicative of the range consumed of the alternative energy source. In this way, the user can clearly interpret the information related to consumption thus far of such alternative energy.

Advantageously, at least one image on each sector comprises an icon indicative of the energy type whose range it represents, in order to make the image(s) displayed clearer for the user of interpret.

In a preferred embodiment of the device of the invention, at least one image is bar-shaped, in order to simply and graphically display the energy consumed and the remaining range.

According to another aspect of the invention, the main image and the additional image are displayed simultaneously. Hence, when the user indicates that the information relating to the various sources of energy present in the hybrid vehicle should appear on the graphical display device, all images are presented immediately, and the user does not have to take additional steps to show the detailed information.

According to yet another aspect of the device of the invention, the available range is expressed in Km, KWh, percentage and/or time, thereby making it possible to display the remaining energy level of the various energy sources in the hybrid vehicle to the user, on the one hand, in a comprehensible manner and that can be applied to driving.

The accompanying drawings show, by way of non-limiting example, a structure formed in accordance with the invention of a method and device for displaying information in a hybrid car. Other characteristics and advantages of the aforementioned method and/or device, object of the invention herein will become apparent from the description of a preferred, although not exclusive embodiment, which is illustrated by way of non-limiting example in the drawings appended, in which:

### BRIEF DESCRIPTION OF THE DRAWINGS

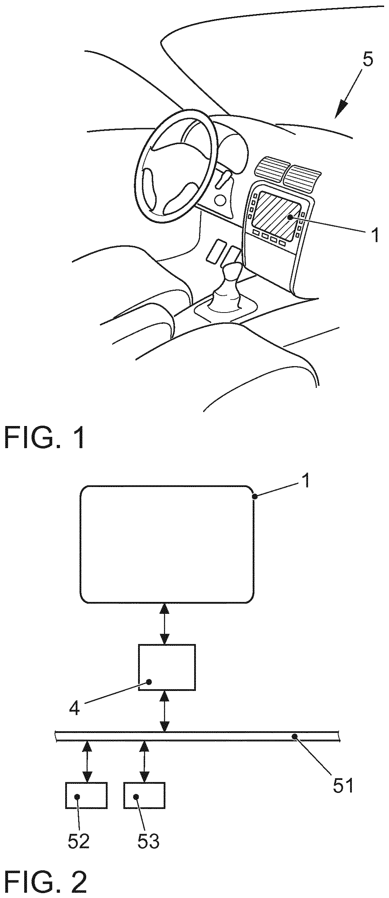

Figure 1.- General front, perspective view of the vehicle interface with the user at the dashboard, according to the invention herein;
Figure 2.- Schematic representation of the components and systems involved in the development of the invention herein;

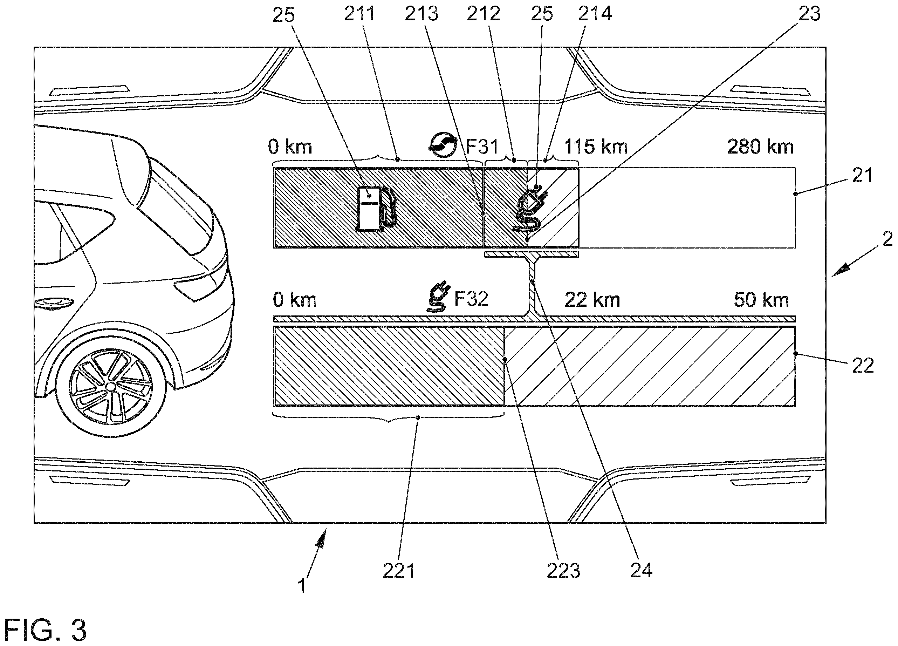

Figure 3.- Front view of a method for displaying the range available by using an alternative energy source compared to using a fossil fuel, according to the invention herein;

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

Thus, as seen in the figures, the method for displaying information in a hybrid car (5) comprises at least one alternative energy source (53) compared to a source of energy from a fossil fuel (52), in which:
- by means of a control device (4) graphical data are generated on a graphical display device (1),
- by means of the aforementioned graphical display device (1) at least one image (2) indicative of an available range (23) is represented, wherein a main image (21) comprises a first sector (211) indicative of the range available (213) by using a fossil fuel (52) as the energy source and a second sector (212) indicative of the range available (223) by the alternative energy source (53) characterised by the fact that it comprises an additional image (22) with a sector (221) as an expansion of the second sector (212) indicative of the range available (223) by the alternative energy source (53). More specifically, and as mentioned in the description the alternative energy source (53) is a source of electrical energy.

It should be noted that at least one image (2) is indicative of the total available range (23) adding the available range (213, 223) in each of the energy sources (52, 53) of the hybrid car (5).

According to another aspect of the invention, the first sector (211) of the main image (21) is differentiated with respect to the second sector (212). Such differentiation may be made apparent through the colour of the image, by leaving a strip to separate said sectors, or also, and alternatively, by varying the transparency, texture or pattern of the drawing. Additionally, the sector (221) of the additional image (22) also comprises the same differentiation as the second sector (212) of the main image (21).

In a preferred embodiment of the invention, at least one image (2) comprises an intermediate drawing (24) linking the additional image (22) with the second sector (212). Said intermediate drawing (24) is preferably in a horizontal H-shape, with two parallel segments, and in this case horizontal segments, of different lengths, such that the upper segment of the horizontal H-shape relates to the amplitude of the second sector (212) added to that of a third sector (214), indicative of the range consumed of the alternative energy source (53), and the lower segment of the horizontal H-shape relates to the total amplitude of the additional image (22).

More specifically, at least one image (2) comprises a third sector (214) indicative of the range consumed of the alternative energy source (53). The aforementioned third sector (214) is preferably in the main image (21) following the second sector (212), or alternatively, or simultaneously in the additional image (22) following the sector (221).

According to another aspect of the invention, at least one image (2) comprises an icon (25) on each sector (211, 212) indicative of the energy type whose range it represents, namely a symbol of a petrol pump for the fossil fuel (52) energy source, and a symbol of an electrical outlet for the alternative energy source (53.)

According to yet another aspect of the invention, at least one image (2) is, in a preferred embodiment of the invention, in the form of a horizontal bar, and can also be a vertical bar in an alternative embodiment or also a number of circular sectors, or any other geometric shape whose representation is easily understandable for a novice user.

It should be noted that the main image (21) and the additional image (22) are displayed simultaneously, as a preferred embodiment, compared to other possible alternatives in which the additional image (22) is shown in response to a user action, either by touching the screen of the graphical device (1) or on another control present in the hybrid vehicle (5).

More specifically, the available range is expressed in Km, KWh, percentage and/or time, either in one of them or several at a time and simultaneously, such as for example in percentage and Km.

The details of the device of the invention herein are the same as those already mentioned for the method implemented therein.

It should additionally be noted that the graphical display device (1) may be the touch screen of the interface with the vehicle user, or alternatively, in an alternative embodiment, an external graphical display device (1) connected to the vehicle, such as for example, the touch screen of a mobile phone or a tablet.

In a particular embodiment, the device comprises a communication channel (51) with the various energy sources (52, 53) present in the hybrid car (5).

The details, shapes and dimensions and other accessory elements as well as the components used in the implementation of the aforementioned method for displaying information in a car may be conveniently replaced by others which are technically equivalent and do not depart from the essential nature of the invention or from the scope defined by the claims contained in the list hereinafter.

### List of numerical references:

- (1): graphical display device
- (2): image
- (21): main image
- (211): first sector main image
- (212): second sector main image
- (213): range available from a fossil fuel energy source
- (214): third sector main image
- (22): additional image
- (221): sector, additional image
- (223): range available from an alternative energy source
- (23): available range
- (24): intermediate drawing
- (25): icon
- (4): control device
- (5): hybrid car
- (51): internal communication channel of the hybrid car
- (52): energy source from a fossil fuel
- (53): alternative energy source

### List of references used as abbreviations of the text within the figures

- F31: Hybrid
- F32: Electric

## Claims

1. Method for displaying information in a hybrid car (5), which comprises at least one alternative energy source (53) compared to a source of energy from a fossil fuel (52), wherein by means of a control device (4), graphical data is generated on a graphical display device (1), by means of the aforementioned graphical display device (1) at least one image (2) indicative of an available range (23) is represented, wherein a main image (21) comprises a first sector (211) indicative of the range available (213) by using a fossil fuel (52) as the energy source, and wherein said at least one image (2) further comprises an additional image (22) with a sector (221) indicative of the range available (223) by the alternative energy source (53), **characterized in that** the main image (21) comprises a second sector (212) indicative of the range available (223) by the alternative energy source (53), wherein the sector (221) is represented as an enlargement of the second sector (212).

2. Method according to claim 1, **characterised in that** at least one image (2) is indicative of the total available range (23) adding the available range (213, 223) in each of the energy sources (52, 53) of the hybrid car (5).

3. Method according to one of the claims 1 or 2, **characterised in that** the first sector (211) of the main image (21) is differentiated with respect to the second sector (212).

4. Method according to claim 3, **characterised in that** the sector (221) of the additional image (22) comprises the same differentiation as the second sector (212) of the main image (21).

5. Method according to one of the claims 1 or 2, **characterised in that** the at least one image (2) comprises an intermediate drawing (24) linking the additional image (22) with the second sector (212).

6. Method according to claim 1, **characterised in that** at least one image (2) comprises a third sector (214) indicative of the range consumed of the alternative energy source (53).

7. Method according to any one of the claims 1 to 6, **characterised in that** at least one image (2) comprises an icon (25) on each sector (211, 212) indicative of the energy type whose range it represents.

8. Method according to any one of the preceding claims, **characterised in that** at least one image (2) is bar shaped.

9. Method according to any of the claims 1, 3, 4, 5 or 6, **characterised in that** the main image (21) and the additional image (22) are displayed simultaneously.

10. Method according to any one of the claims 1, 2, 6 or 7, **characterised in that** the available range is expressed in Km, KWh, percentage and/or time.

11. Device for displaying information in a hybrid car (5), which comprises at least one alternative energy source (53) compared to a source of energy from a fossil fuel (52), a graphical display device (1) and a control device (4), wherein
- by means of the control device (4) graphical data is generated in the graphical display device (1).
- by means of the aforementioned graphical display device (1) at least one image (2) indicative of an available range (213, 223) is represented by each one of the energy sources (52, 53) of the hybrid car (5), wherein a main image (21) comprises a first sector (211) indicative of the range available (213) by using a fossil fuel (52) as the energy source and the device being configured such that said at least one image (2) further comprises an additional image (22) with a sector (221) as an enlargement of the second sector (212) indicative of the range available (223) by the alternative energy source (53), **characterized in that** the main image (21) comprises a second sector (212) indicative of the range available (223) by the alternative energy source (53).

12. Device according to claim 11, **characterised in that** at least one image (2) is indicative of the total available range (23) adding the available range (213, 223) in each of the energy sources (52, 53) of the hybrid car (5).

13. Device according to one of the claims 11 or 12, **characterised in that** the first sector (211) of the main image (21) is differentiated with respect to the second sector (212).

14. Device according to claim 13, **characterised in that** the sector (221) of the additional image (22) comprises the same differentiation as the second sector (212) of the main image (21).

15. Device according to one of the claims 11 or 12, **characterised in that** the at least one image (2) comprises an intermediate drawing (24) linking the additional image (22) with the second sector (212).

16. Device according to claim 11, **characterised in that** at least one image (2) comprises a third sector (214) indicative of the range consumed of the alternative energy source (53).

17. Device according to any one of the claims 11 to 16, **characterised in that** at least one image (2) comprises an icon (25) on each sector (211, 212) indicative of the energy type whose range it represents.

18. Device according to any one of the preceding claims, **characterised in that** at least one image (2) is bar shaped.

19. Device according to any of the claims 11, 13, 14, 15 or 16, **characterised in that** the main image (21) and the additional image (22) are displayed simultaneously.

20. Device according to any one of the claims 11, 12, 16 or 17, **characterised in that** the available range is expressed in Km, KWh, percentage and/or time.

## Patentansprüche

1. Verfahren zum Anzeigen von Informationen in einem Hybridfahrzeug (5), das mindestens eine im Vergleich zu einer Energiequelle aus einem fossilen Kraftstoff (52) alternative Energiequelle (53) umfasst, wobei
Grafikdaten mittels einer Steuereinrichtung (4) auf einer Grafikanzeigevorrichtung (1) erzeugt werden,
mindestens ein Bild (2), das eine verfügbare Reichweite (23) anzeigt, mittels der Grafikanzeigevorrichtung (1) dargestellt wird, wobei ein Hauptbild (21) einen ersten Bereich (211) umfasst, der die unter Verwendung eines fossilen Kraftstoffs (52) als Energiequelle verfügbare Reichweite (213) anzeigt, und
das mindestens eine Bild (2) ferner ein zusätzliches Bild (22) mit einem Bereich (221), der die mit der alternativen Energiequelle (53) verfügbare Reichweite (223) anzeigt, umfasst, **dadurch gekennzeichnet, dass** das Hauptbild (21) einen zweiten Bereich (212) umfasst, der die mit der alternativen Energiequelle (53) verfügbare Reichweite (223) anzeigt, wobei der Bereich (221) als eine Erweiterung des zweiten Bereichs (212) dargestellt wird.

2. Verfahren nach Anspruch 1, **dadurch gekennzeichnet, dass** mindestens ein Bild (2) die verfügbare Gesamtreichweite (23) durch Addieren der verfügbaren Reichweiten (213, 223) von jeder der Energiequellen (52, 53) des Hybridfahrzeugs (5) anzeigt.

3. Verfahren nach einem der Ansprüche 1 oder 2, **dadurch gekennzeichnet, dass** der erste Bereich (211) des Hauptbildes (21) von dem zweiten Bereich (212) abgegrenzt ist.

4. Verfahren nach Anspruch 3, **dadurch gekennzeichnet, dass** der Bereich (221) des zusätzlichen Bildes (22) die gleiche Abgrenzung wie der zweite Bereich (212) des Hauptbildes (21) umfasst.

5. Verfahren nach einem der Ansprüche 1 oder 2, **dadurch gekennzeichnet, dass** das mindestens eine Bild (2) eine Zwischenzeichnung (24) umfasst, die das zusätzliche Bild (22) mit dem zweiten Bereich (212) verbindet.

6. Verfahren nach Anspruch 1, **dadurch gekennzeichnet, dass** mindestens ein Bild (2) einen dritten Bereich (214) umfasst, der die verbrauchte Reichweite der alternativen Energiequelle (53) anzeigt.

7. Verfahren nach einem der Ansprüche 1 bis 6, **dadurch gekennzeichnet, dass** mindestens ein Bild (2) ein Symbol (25) in jedem Bereich (211, 212) umfasst, das den Energietyp, dessen Reichweite er repräsentiert, anzeigt.

8. Verfahren nach einem der vorhergehenden Ansprüche, **dadurch gekennzeichnet, dass** mindestens ein Bild (2) balkenförmig ist.

9. Verfahren nach einem der Ansprüche 1, 3, 4, 5 oder 6, **dadurch gekennzeichnet, dass** das Hauptbild (21) und das zusätzliche Bild (22) gleichzeitig angezeigt werden.

10. Verfahren nach einem der Ansprüche 1, 2, 6 oder 7, **dadurch gekennzeichnet, dass** die verfügbare Reichweite in km, kWh, Prozent und/oder Zeit ausgedrückt wird.

11. Vorrichtung zum Anzeigen von Informationen in einem Hybridfahrzeug (5), das mindestens eine im Vergleich zu einer Energiequelle aus einem fossilen Kraftstoff (52) alternative Energiequelle (53), eine Grafikanzeigevorrichtung (1) und eine Steuereinrichtung (4) umfasst, wobei
- Grafikdaten mittels der Steuereinrichtung (4) auf der Grafikanzeigevorrichtung (1) erzeugt werden,
- mindestens ein Bild (2), das eine mit jeder der Energiequellen (52, 53) des Hybridfahrzeugs (5) verfügbare Reichweite (213, 223) anzeigt, mittels der Grafikanzeigevorrichtung (1) dargestellt wird, wobei ein Hauptbild (21) einen ersten Bereich (211) umfasst, der die unter Verwendung eines fossilen Kraftstoffs (52) als Energiequelle verfügbare Reichweite (213) anzeigt, und die Vorrichtung derart konfiguriert ist, dass das mindestens eine Bild (2) ferner ein zusätzliches Bild (22) mit einem Bereich (221), der die mit der alternativen Energiequelle (53) verfügbare Reichweite (223) anzeigt, umfasst, **dadurch gekennzeichnet, dass** das Hauptbild (21) einen zweiten Bereich (212) umfasst, der die mit der alternativen Energiequelle (53) verfügbare Reichweite (223) anzeigt.

12. Vorrichtung nach Anspruch 11, **dadurch gekennzeichnet, dass** mindestens ein Bild (2) die verfügbare Gesamtreichweite (23) durch Addieren der verfügbaren Reichweiten (213, 223) von jeder der Energiequellen (52, 53) des Hybridfahrzeugs (5) anzeigt.

13. Vorrichtung nach einem der Ansprüche 11 oder 12, **dadurch gekennzeichnet, dass** der erste Bereich (211) des Hauptbildes (21) von dem zweiten Bereich (212) abgegrenzt ist.

14. Vorrichtung nach Anspruch 13, **dadurch gekennzeichnet, dass** der Bereich (221) des zusätzlichen Bildes (22) die gleiche Abgrenzung wie der zweite Bereich (212) des Hauptbildes (21) umfasst.

15. Vorrichtung nach einem der Ansprüche 11 oder 12, **dadurch gekennzeichnet, dass** das mindestens eine Bild (2) eine Zwischenzeichnung (24) umfasst, die das zusätzliche Bild (22) mit dem zweiten Bereich (212) verbindet.

16. Vorrichtung nach Anspruch 11, **dadurch gekennzeichnet, dass** mindesten ein Bild (2) einen dritten Bereich (214) umfasst, der die verbrauchte Reichweite der alternativen Energiequelle (53) anzeigt.

17. Vorrichtung nach einem der Ansprüche 11 bis 16, **dadurch gekennzeichnet, dass** mindestens ein Bild (2) ein Symbol (25) in jedem Bereich (211, 212) umfasst, das den Energietyp, dessen Reichweite er repräsentiert, anzeigt.

18. Vorrichtung nach einem der vorhergehenden Ansprüche, **dadurch gekennzeichnet, dass** mindestens ein Bild (2) balkenförmig ist.

19. Vorrichtung nach einem der Ansprüche 11, 13, 14, 15 oder 16, **dadurch gekennzeichnet, dass** das Hauptbild (21) und das zusätzliche Bild (22) gleichzeitig angezeigt werden.

20. Vorrichtung nach einem der Ansprüche 11, 12, 16 oder 17, **dadurch gekennzeichnet, dass** die verfügbare Reichweite in km, kWh, Prozent und/oder Zeit ausgedrückt wird.

## Revendications

1. Procédé d'affichage d'informations dans un véhicule hybride (5), lequel comprend au moins une source d'énergie de remplacement (53) en comparaison à une source d'énergie provenant d'un combustible fossile (52), dans lequel
au moyen d'un dispositif de commande (4), des données graphiques sont générées sur un dispositif d'affichage graphique (1),
au moyen du dispositif d'affichage graphique susmentionné (1) au moins une image (2) indicative d'une autonomie disponible (23) est représentée, dans lequel une image principale (21) comprend un premier secteur (211) indicatif de l'autonomie disponible (213) en utilisant un combustible fossile (52) comme source d'énergie, et
dans lequel ladite au moins une image (2) comprend en outre une image supplémentaire (22) présentant un secteur (221) indicatif de l'autonomie disponible (223) par la source d'énergie de remplacement (53), **caractérisé en ce que** l'image principale (21) comprend un deuxième secteur (212) indicatif de l'autonomie disponible (223) par la source d'énergie de remplacement (53), dans lequel le secteur (221) est représenté sous forme d'agrandissement du deuxième secteur (212).

2. Procédé selon la revendication 1, **caractérisé en ce qu'**au moins une image (2) indique l'autonomie disponible totale (23) en ajoutant l'autonomie disponible (213, 223) dans chacune des sources d'énergie (52, 53) du véhicule hybride (5).

3. Procédé selon l'une quelconque des revendications 1 ou 2, **caractérisé en ce que** le premier secteur (211) de l'image principale (21) est différencié par rapport au deuxième secteur (212).

4. Procédé selon la revendication 3, **caractérisé en ce que** le secteur (221) de l'image supplémentaire (22) comprend la même différenciation que le deuxième secteur (212) de l'image principale (21).

5. Procédé selon l'une quelconque des revendications 1 ou 2, **caractérisé en ce que** l'au moins une image (2) comprend un dessin intermédiaire (24) liant l'image supplémentaire (22) au deuxième secteur (212) .

6. Procédé selon la revendication 1, **caractérisé en ce qu'**au moins une image (2) comprend un troisième secteur (214) indicatif de l'autonomie consommée par la source d'énergie de remplacement (53).

7. Procédé selon l'une quelconque des renvedications 1 à 6, **caractérisé en ce qu'**au moins une image (2) comprend une icône (25) sur chaque secteur (211, 212) indicative du type d'énergie dont l'autonomie est représentée.

8. Procédé selon l'une quelconque des revendications précédentes, **caractérisé en ce qu'**au moins une image (2) est en forme de bâtonnets.

9. Procédé selon l'une quelconque des revendications 1, 3, 4, 5 ou 6, **caractérisé en ce que** l'image principale (21) et l'image supplémentaire (22) sont affichées simultanément.

10. Procédé selon l'une quelconque des revendications 1, 2, 6 ou 7, **caractérisé en ce que** l'autonomie disponible est exprimée en Km, KWh, pourcentage et/ou temps.

11. Dispositif d'affichage d'informations dans un véhicule hybride (5), lequel comprend au moins une source d'énergie de remplacement (53) en comparaison à une source d'énergie provenant d'un combustible fossile (52), un dispositif d'affichage graphique (1) et un dispositif de commande (4), configuré de telle sorte que
- au moyen du dispositif de commande (4), des données graphiques soient générées sur le dispositif d'affichage graphique (1),
- au moyen du dispositif d'affichage graphique susmentionné (1) au moins une image (2) indicative d'une autonomie disponible (213, 223) soit représentée par chacune des sources d'énergie (52, 53) du véhicule hybride (5), dans lequel une image principale (21) comprend un premier secteur (211) indicatif de l'autonomie disponible (213) en utilisant un combustible fossile (52) comme source d'énergie, et le dispositif étant configuré de telle sorte que ladite au moins une image (2) comprenne en outre une image supplémentaire (22) présentant un secteur (221) sous forme d'agrandissement du deuxième secteur (212) indicatif de l'autonomie disponible (223) par la source d'énergie de remplacement (53), **caractérisé en ce que** l'image principale (21) comprend un deuxième secteur (212) indicatif de l'autonomie disponible (223) par la source d'énergie de remplacement (53).

12. Dispositif selon la revendication 11, **caractérisé en ce qu'**au moins une image (2) est indicative de l'autonomie disponible totale (23) en ajoutant l'autonomie disponible (213, 223) dans chacune des sources d'énergie (52, 53) du véhicule hybride (5) .

13. Device selon l'une quelconque des revendications 11 ou 12, **caractérisé en ce que** le premier secteur (211) de l'image principale (21) est différencié par rapport au deuxième secteur (212).

14. Dispositif selon la revendication 13, **caractérisé en ce que** le secteur (221) de l'image supplémentaire (22) comprend la même différenciation que le deuxième secteur (212) de l'image principale (21).

15. Device selon l'une quelconque des revendications 11 ou 12, **caractérisé en ce que** l'au moins une image (2) comprend un dessin intermédiaire (24) liant l'image supplémentaire (22) au deuxième secteur (212).

16. Dispositif selon la revendication 11, **caractérisé en ce qu'**au moins une image (2) comprend un troisième secteur (214) indicatif de l'autonomie consommée de la source d'énergie de remplacement (53) .

17. Dispositif selon l'une quelconque des revendications 11 à 16, **caractérisé en ce qu'**au moins une image (2) comprend une icône (25) sur chaque secteur (211, 212) indicative du type d'énergie dont l'autonomie est représentée.

18. Dispositif selon l'une quelconque des revendications précédentes, **caractérisé en ce qu'**au moins une image (2) est en forme de bâtonnets.

19. Dispositif selon l'une quelconque des revendications 11, 13, 14, 15 ou 16, **caractérisé en ce que** l'image principale (21) et l'image supplémentaire (22) sont affichées simultanément.

20. Dispositif selon l'une quelconque des revendications 11, 12, 16 ou 17, **caractérisé en ce que** l'autonomie disponible est exprimée en Km, KWh, pourcentage et/ou temps.
